# EUROPEAN PATENT SPECIFICATION

(11) **EP 4 030 054 B1**
(45) Date of publication and mention of the grant of the patent: **04.12.2024**
(21) Application number: 21215795.2
(22) Date of filing: 20.12.2021
(51) Int. Cl.: F03D 17/00

(54) **BLADE STATE MONITORING METHOD AND DEVICE, STORAGE MEDIUM, AND WIND POWER GENERATOR**
SCHAUFELZUSTANDÜBERWACHUNGSVERFAHREN UND -VORRICHTUNG, SPEICHERMEDIUM UND WINDENERGIEGENERATOR
PROCÉDÉ ET DISPOSITIF DE SURVEILLANCE D'ÉTAT DE PALE, SUPPORT DE STOCKAGE ET GÉNÉRATEUR D'ÉNERGIE ÉOLIENNE

(30) Priority: 18.01.2021 CN 202110065293
(43) Date of publication of application: 20.07.2022
(73) Proprietor: Shanghai Baiantek Sensing Technology Co., Ltd., Shanghai 200000 (CN)
(72) Inventor: WU, Xunqi, Pudong New Area, Shanghai 200000 (CN); WANG, Xinzhong, Pudong New Area, Shanghai 200000 (CN); WEI, Lili, Pudong New Area, Shanghai 200000 (CN); LI, Weiwei, Pudong New Area, Shanghai 200000 (CN); ZHONG, Shaolong, Pudong New Area, Shanghai 200000 (CN); HUANG, Zheng, Pudong New Area, Shanghai 200000 (CN)
(74) Representative: Kolster Oy Ab

(56) References cited:
- EP-A1- 3 757 386
- WO-A2-2015/065873
- CN-A- 109 209 783
- US-A1- 2014 054 894

## Description

### TECHNICAL FIELD

The present disclosure relates to the technical field of data processing, in particular to a blade state monitoring method and device, a storage medium, and a wind power generator.

### BACKGROUND

The wind power generation system will be affected by the surrounding complex environmental conditions during operation. As giant wind turbines are manufactured and operated now, the length of the blades must be at least 100 meters. Therefore, the leading and trailing edges of the blades are added during the production process. The difficulty of the time. In wind farms with a relatively high corrosive climate, such as offshore wind farms, the blades will gradually experience erosion of the front edge after the third or even second year. If the erosion of the front edge cannot be repaired in time, moisture will enter before the Hollow edges, lightning strikes, or icing occur, which in turn lead to the cracking of the leading edge of the blade. Once the leading edge of the blade cracks, the wind turbine must be shut down and repaired. Otherwise, the cracked part of the blade may continue to deteriorate, the crack will continue to expand, and eventually the blade will be scrapped, thereby threatening production safety and causing economic losses. Compared with the leading edge of the blade, the thickness of the trailing edge of the blade is thinner. Because it is a leeward surface, it is not easy to be corroded and cracked at the clamping part of the trailing edge. However, the trailing edge of the blade is very thin in the tip area. Carelessness can cause delamination or cracking of the trailing edge. The damage to the trailing edge of this type of blade is generally small and difficult to be found, but if it is not repaired in time, the damage will be torn apart along the chord of the blade to the girder, causing serious consequences and losses.

At present, there is basically no technical solution to monitor blade cracking in the wind power industry, and popularized industrial products have not yet formed.

How to monitor the cracking of the blade is an urgent problem to be solved.

WO2015/065873A2 discloses systems and methods for detecting damage or defects in wind turbine blades are described. In one embodiment, a sound receiver interior to the blade is used to listen for noise that is associated with the presence of damage or defects that interact with air flowing over the exterior of the blade. In another embodiment, a sound source located within the blade generates sound that is received by one or more sound receivers external to the blade. The received sounds are communicated wirelessly to a data processing system that analyzes the sound data. The results can be recorded, displayed, or transmitted for further processing. The systems have detected cracks and holes as small as one millimeter in diameter. One advantage of the system is that it makes possible preventive maintenance on an as needed or preplanned (scheduled) basis, rather than as an emergency response to turbine blade failure.

EP3757386 A1 discloses systems, methods, and computer-readable storage media configured to monitor wind turbines and detect damage to one or more components of the wind turbines, such as damage to the blades. The techniques disclosed herein may utilize sensors (e.g., acoustic sensors) disposed within air cavities of one or more blades of the wind turbines to detect acoustic signals or acoustic energy caused by corrosive impacts (e.g., wind, dust, rain, hail, lightning, etc.) to the wind turbine. Information associated with the acoustic signals may be provided to and received by a processor used to determine whether one or more of the blades of the wind turbines have been damaged. The techniques disclosed herein may facilitate real-time or near-real-time monitoring of wind turbines for damage, which may enable more efficient operation and maintenance of wind turbines.

### SUMMARY

The technical problem solved by the present disclosure is how to monitor the cracks of the wind turbine blades.

In order to solve the above technical problems, an embodiment of the present disclosure provides a blade state monitoring method. The blade state monitoring method includes: acquiring sensor data from a sensor array, the sensor array including a plurality of sensors, and the plurality of sensors including acoustic sensors, wherein the sensor array is disposed inside a blade of a wind power generator, and the sensor data includes sound data; determining whether there is abnormal data in the sensor data, wherein the abnormal data is sensor data whose index value changes regularly when the sensor data is sound data; if it is, it is determined that a state of the blade is cracked.

Optionally, determining whether there is abnormal data in the sensor data includes: determining whether there is data that periodically changes in the sensor data.

Optionally, the blade state monitoring method further includes: determining a cracking position of the blade according to a position of a source sensor of the abnormal data.

Optionally, the abnormal data has an amplitude and a frequency, and determining the cracking position of the blade according to the position of the source sensor of the abnormal data includes: determining the position of the source sensor of abnormal data with an amplitude greater than a first preset threshold, or a frequency greater than a second preset threshold, as the cracking position.

According to this embodiment the blade state monitoring method further includes: determining a cracking speed of the blade according to a change amplitude or a change frequency of the abnormal data in a unit time; and/or, determining the crack length of the blade according to the amplitude, phase, or frequency of the abnormal data.

Optionally, determining the cracking speed of the blade according to the change amplitude or the change frequency of the abnormal data in a unit time includes: determining the cracking speed according to a difference in the amplitude or the frequency of the abnormal data at adjacent collection moments, wherein the greater the difference, the greater the cracking speed.

Optionally, determining the crack length of the blade according to the amplitude, phase, or frequency of the abnormal data includes: determining the crack length according to the amplitude or frequency of abnormal sound data, wherein the greater the amplitude or the frequency of the abnormal sound data, the longer the crack length.

Optionally, the sensor array further includes a temperature sensor and/or an air pressure sensor, and the sensing data includes temperature data and/or air pressure data.

Optionally, multiple sensors are staggered and fixed inside the blade or fixed in parallel inside the blade.

Optionally, the sensor array is arranged in the direction of a blade root pointing to a blade tip, and is fixed at a leading edge position, a trailing edge position of the blade or a web inside the blade.

Optionally, a plurality of sensors in the sensor array are fixed inside the blade according to a preset distance.

Optionally, the multiple sensors are passive sensors, or the multiple sensors are MEMS optical fiber sensors.

In order to solve the above technical problem, another embodiment of the present disclosure also discloses a blade state monitoring device. The blade state monitoring device includes: an acquisition module for acquiring sensor data from a sensor array. The sensor array includes a plurality of sensors. The plurality of sensors include acoustic sensors, the sensor array is arranged inside the blades of the wind turbine, and the sensor data includes sound data; and the judgment module is used to judge whether there is abnormal data in the sensor data. The data is the sensor data whose index value changes regularly when the sensor data is sound data; the result determination module is used to determine that the state of the blade is cracked when there is abnormal data in the sensor data, and a cracking speed of the blade is determined according to a change amplitude or a change frequency of the abnormal data in a unit time, and/or a crack length of the blade is determined according to the amplitude, phase or frequency of the abnormal data.

The embodiment of the present disclosure also discloses a storage medium on which a computer program is stored, and when the computer program is run by a processor, the steps of the blade state monitoring method are executed.

The embodiment of the present disclosure also discloses a wind power generator, which includes: a sensor array arranged inside the blade of the wind power generator; and a blade state monitoring device.

The embodiment of the present disclosure also discloses a storage medium on which a computer program is stored, and when the computer program is run by a processor, the steps of the blade state monitoring method are executed.

Compared with the prior art, the technical solution of the embodiment of the present disclosure has the following beneficial effects:

In the technical scheme of the present disclosure, by setting a sensor array inside the blade, the sound sensor data in the blade can be collected, and by analyzing the sound data to determine whether there is sensor data with regular changes in value, it can be determined whether the blade is cracked. By detecting the state of the blades, problems can be found in time, avoiding potential safety hazards caused by blade cracking, ensuring the safety of wind power generation and reducing equipment maintenance costs.

Further, the technical solution of the present disclosure determines the cracking position of the blade according to the position of the source sensor of the abnormal data; and/or, determining the cracking of the blade according to the change amplitude or frequency of the abnormal data per unit time Speed; and/or, determining the crack length of the blade according to the amplitude, phase, or frequency of the abnormal data. The technical solution of the present disclosure can also monitor the cracking position, cracking speed or cracking length of the blade through sensor data, and by providing multi-dimensional monitoring results, it provides reference for the maintenance of the blade and further ensures the safety of wind power generation.

Further, the multiple sensors in the sensor array also include a temperature sensor and an air pressure sensor. By collecting sensor data in multiple dimensions and used to monitor the blade state, the accuracy and robustness of the blade state monitoring can be ensured.

### BRIEF DESCRIPTION OF THE DRAWINGS

Figure 1 is a schematic structural diagram of a blade condition monitoring system according to an embodiment of the present disclosure;
Figure 2 is a schematic diagram of a blade structure according to an embodiment of the present disclosure;
Figure 3 is a schematic cross-sectional structure diagram of the blade shown in Figure 2;
Figure 4 is a flowchart of a method for monitoring the state of a blade according to an embodiment of the present disclosure;
Figure 5 is a schematic diagram of sensor data according to an embodiment of the present disclosure;
Figure 6 is a schematic diagram of another type of sensor data according to an embodiment of the present disclosure;
Figure 7 is a schematic diagram of still another sensor data according to an embodiment of the present disclosure;
Figure 8 is a schematic structural diagram of a blade state monitoring device according to an embodiment of the present disclosure.

### DETAILED DESCRIPTION

As mentioned in the background art, there is basically no technical solution for monitoring blade cracking in the wind power industry, and popularized industrial products have not yet formed. How to monitor the cracking of the blade is an urgent problem to be solved.

The inventor of the present application found that if there are cracks in the blades of the wind turbine, under the action of the weight and aerodynamic force of the blades, during the rotation of the blades, the cracks will open or close according to the rotation position of the blades, and produce a certain rhythm. The phenomenon of "beating". After the blade is cracked, due to the crack opening and closing effect, the blade aerodynamic noise measured by the acoustic sensor will change regularly. Therefore, the cracking state of the blade can be judged by monitoring whether the sound data in the blade changes regularly.

In the technical solution of the present disclosure, by setting a sensor array inside the blade, the sound sensor data in the blade can be collected, and by analyzing the sound data to determine whether there is sensor data with regular changes in value, it can be determined whether the blade is cracked. By detecting the state of the blades, problems can be found in time, avoiding potential safety hazards caused by blade cracking, ensuring the safety of wind power generation and reducing equipment maintenance costs.

In order to make the above objectives, features and advantages of the present disclosure more obvious and understandable, specific embodiment of the present disclosure will be described in detail below with reference to the accompanying drawings.

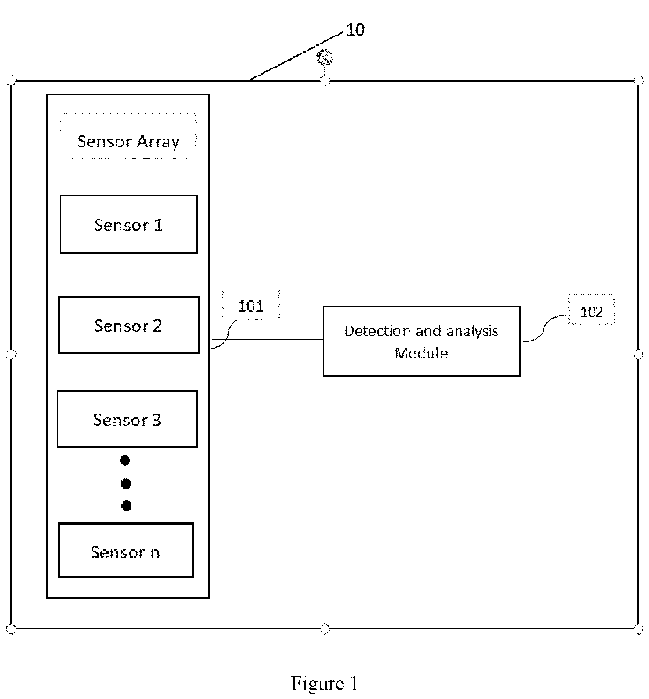

Figure 1 is a schematic structural diagram of a blade condition monitoring system according to an embodiment of the present disclosure.

The blade state monitoring system 10 may be installed inside the wind turbine, for example, the sensor array is installed inside the blade of the wind turbine, and the monitoring and analysis module is installed inside the hub case. The blade condition monitoring system 10 can be applied to blades of wind power generators with different structures.

It should be noted that the various modules in the blade state monitoring system 10 may also be arranged in different structures of the wind turbine according to actual application scenarios, which is not limited in the embodiment of the present disclosure.

Specifically, the blade state monitoring system 10 may include a sensor array 101 and a monitoring analysis module 102. The monitoring analysis module 102 may also be referred to as a blade state monitoring device. The monitoring analysis module 102 may be a hardware device with a processor, or a chip or a chip module, which is not limited in the embodiment of the present disclosure.

Wherein, the sensor array 101 includes a plurality of sensors (that is, sensor 1, sensor 2, ... sensor n), the plurality of sensors may be acoustic sensors, the sensor array is disposed inside the blade of the wind turbine, and the sensor The data includes sound data.

In a variation of the present disclosure, the plurality of sensors may further include a temperature sensor and/or an air pressure sensor, and correspondingly, the sensor data includes temperature data and/or air pressure data.

The monitoring analysis module 102 is used to obtain the sensor data collected by the sensor array and determine whether there is abnormal data in the sensor data. If there is abnormal data, that is, the sound data whose value changes regularly, determine the state of the blade is cracked.

In this embodiment, the sensor array 101 can collect sensor data inside the blade, such as sound data, temperature data, and/or air pressure data. Multiple sensors in the sensor array 101 may be connected in parallel or in series.

In specific implementation, the multiple sensors in the sensor array 101 may be acoustic sensors, temperature sensors, air pressure sensors, and combinations thereof. Specifically, the multiple sensors in the sensor array 101 may be multiple acoustic sensors, multiple temperature sensors, multiple air pressure sensors, multiple acoustic sensors and multiple temperature sensors, or multiple sensors. One acoustic sensor and multiple air pressure sensors, or multiple temperature sensors and multiple air pressure sensors, or multiple acoustic sensors, multiple temperature sensors, and multiple air pressure sensors. Among them, the acoustic sensor can collect sound data in the blade, the temperature sensor can collect temperature data in the blade, and the air pressure sensor can collect air pressure data in the blade.

In a variation, the plurality of sensors in the sensor array 101 may also be a composite sensor formed by a combination of two or three of acoustic sensors, temperature sensors, and air pressure sensors.

It should be noted that the number of sensors in the sensor array 101 can be set according to actual application scenarios, for example, can be determined according to the length of the blade and the separation distance between the sensors, which is not limited in the embodiment of the present disclosure.

In a non-limiting embodiment of the present disclosure, the sensor array is arranged in the direction of the blade root pointing to the tip of the blade, and is fixed at the front edge position, the rear edge position of the blade or the belly of the blade. On the board.

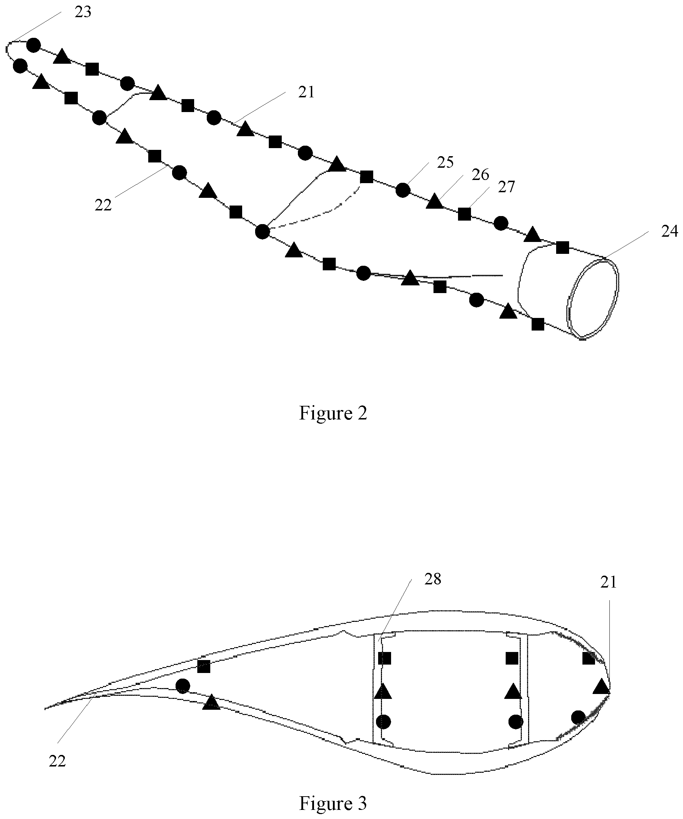

Please refer to Figures 2 and 3 for details. Figure 2 shows the specific structure of the blade, and Figure 3 shows a cross-sectional view of the blade. A plurality of sensors in the sensor array are fixed on the leading edge 21 or the trailing edge 22 of the blade in the direction where the blade root 24 points to the blade tip 23, or it can be said that the blade tip 23 points to the blade root 24 direction. Alternatively, a plurality of sensors in the sensor array may be fixed on the web 28 of the blade.

In a non-limiting embodiment of the present disclosure, a plurality of sensors in the sensor array are fixed inside the blade according to a preset distance.

Specifically, the sensor can be installed and fixed by bonding, screw fastening, or implanting on the blade or/and the web. The preset distance can be set according to actual application requirements, for example, it can be 5 meters.

In a non-limiting embodiment of the present disclosure, when the multiple sensors are selected from two or three of acoustic sensors, temperature sensors, and air pressure sensors, the multiple sensors are staggered and fixed inside the blade or fixed in parallel inside the blade.

Still referring to Figures 2 and 3, the sensor array includes three types of sensors: an acoustic sensor 25, a temperature sensor 26, and an air pressure sensor 27 as an example for description. Along the direction from the blade root 24 to the blade tip 23, at positions close to the leading edge 21 and the trailing edge 22 of the blade or on the web 28 of the blade, air pressure sensors, temperature sensors and air pressure sensors are arranged every 5 meters. Acoustic sensors, temperature sensors and air pressure sensors are arranged alternately or side by side. Acoustic sensors, temperature sensors, and air pressure sensors can form the sensor array 101 in series or/and parallel, respectively.

Correspondingly, the sensor array 101 is connected to the monitoring and analysis module 102 located inside the hub case, so as to process, analyze and warn the sensor data. Specifically, the monitoring and analysis module 102 can obtain the sensor data collected by the sensor array 101, and determine whether there is abnormal data in the sensor data, and if there is abnormal data, it is determined that the state of the blade is cracked. Otherwise, it is determined that the state of the blade is normal.

In a non-limiting embodiment of the present disclosure, the acoustic sensor, the temperature sensor, and the air pressure sensor may be passive sensors; or, the acoustic sensor, the temperature sensor, and the air pressure sensor are micro-electromechanical systems (Micro-electromechanical systems). Electro-Mechanical System (MEMS) optical fiber sensor, or the acoustic sensor, the temperature sensor, and the air pressure sensor are Micro-Opto-Electro-Mechanical System (MOEMS) sensors, or the acoustic sensor, the The temperature sensor and the air pressure sensor are Micro-Opto-Mechanical System (MOMS) sensors.

The MEMS, MOEMS, and MOMS mentioned in the embodiment of the present disclosure may refer to the same sensing technology.

Specifically, MEMS optical fiber sensing technology is a technology based on micro/nano mechanics and optics. The masses, elastic supports, optical reflective micro mirrors, light incident and exit wave guide systems of this technology are directly integrated on a tiny chip, which truly realizes all-optical detection and transmission of signals such as vibration, sound, and temperature. The manufactured MEMS chip has the advantages of compact structure, integrated package, good parameter consistency, high sensitivity, large dynamic range and good linearity. When the vibration frequency starts from 0Hz, it has flat frequency response characteristics, and the phase changes linearly, and the performance is stable and reliable.

The silicon-based sensitive structure of the MEMS chip is integrated and manufactured by micro-electromechanical technology, and the signal is detected and read using optical fiber detection technology, so it has the common advantages of MEMS sensing technology and optical fiber sensing technology. In addition, MEMS optical fiber sensing technology overcomes the mutual restriction between the "broadband" and "high precision" of the existing sensing technology. It has the characteristics of passive, wide temperature, miniaturization, anti-electromagnetic interference, lightness, easy networking and maintenance-free. Therefore, long-term accurate measurement can be achieved, and the complexity and cost of the smart operation and maintenance system can be reduced. Therefore, MEMS optical fiber sensing technology is very suitable for real-time monitoring of the cracking of the leading edge and trailing edge of the blade in the wind power industry.

In this embodiment, passive sensors, MEMS optical fiber sensing, MOEMS, and MOMS technologies belong to passive detection, that is, the detection terminal is not charged, so it can resist electromagnetic and lightning, so as to prevent the wind turbine from being struck by lightning in an open wind field. Interference and even damage caused by detection ensure the normal progress and accuracy of monitoring.

It should be noted that the MEMS optical fiber sensor may also be any other implementable single-point sensor or continuous distributed sensor using optical fiber as a sensing or transmission medium, which is not limited in the embodiment of the present disclosure.

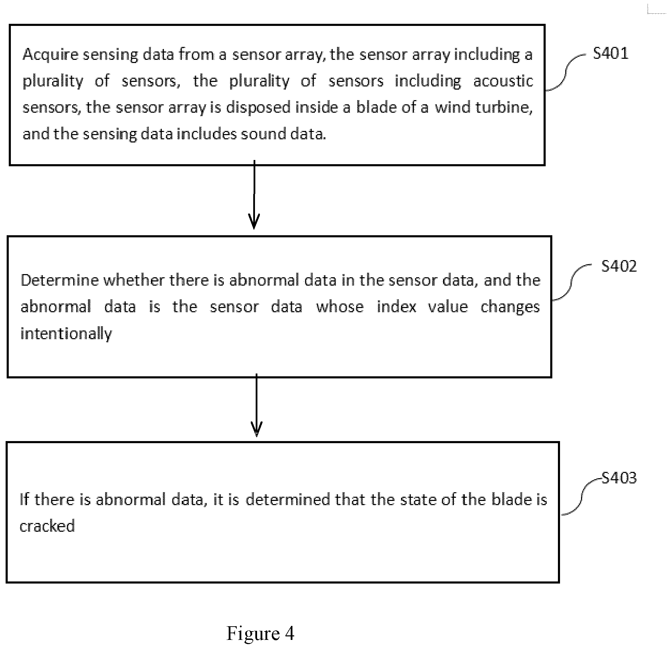

Please refer to Figure 4, an embodiment of the present disclosure also discloses a blade state monitoring method. The various steps of the blade state monitoring method shown can be executed by the monitoring analysis module 102 shown in Figure 1.

Specifically, the blade state monitoring method may include the following steps:

Step S401: Acquire sensor data from a sensor array, the sensor array includes a plurality of sensors, the plurality of sensors include acoustic sensors, the sensor array is disposed inside the blade of the wind turbine, and the sensor data includes sound data;

Step S402: Determine whether there is abnormal data in the sensor data, and the abnormal data is sensor data whose index value changes regularly;

Step S403: If there is abnormal data, it is determined that the state of the blade is cracked.

It should be pointed out that the sequence number of each step in this embodiment does not represent a limitation on the execution order of each step.

Specifically, the sensor data may be acquired in real time, or may be acquired at a preset time interval, and the preset time interval may be a sampling interval of the sensor.

As mentioned above, if the blade has cracks, under the action of the blade's own weight and aerodynamic force, during the blade rotation, the cracks will open or close according to the rotation position of the blade, and produce a certain rhythmic "beat vibration" phenomenon. After the blade is cracked, the crack opening and closing effect will cause the blade aerodynamic noise measured by the acoustic sensor to change. In other words, compared to the sensor data collected before the blade is cracked, the sensor data collected after the blade is cracked will change, and the changed sensor data can be called abnormal data.

In a variation of the present disclosure, since the wind turbine blades are completely airtight and the heat conductivity of the material of the blades is very weak, a basically steady temperature field will be formed inside the blades, and the breathing effect of the cracks formed by the blade cracks will cause the temperature sensor The measured internal temperature of the blade changes; or, if the wind turbine blade is completely sealed, a basically stable air pressure field will form inside the blade, and the breathing effect of the crack formed by the blade crack will cause the internal air pressure measured by the air pressure sensor to change.

Therefore, this embodiment can determine whether the blade is cracked by determining whether there is abnormal data in the sensor data. When the sensor data is sound data, the abnormal data is the sensor data whose index value changes regularly, or the sensor data whose value changes regularly after a sudden change. For example, the sound decibel value suddenly increases and then changes periodically; the sensor data is In the case of temperature data or air pressure data, the abnormal data is the sensor data with a sudden change in the index value.

It is understandable that the sudden change referred to in the embodiment of the present disclosure refers to a situation in which the value changes significantly within a certain period of time, and specifically may be that the value increases or decreases the preset threshold value within a preset time period. For example, a sudden change in sound data can mean that the sound decibel value rises to a preset value instantaneously (such as unit time); a sudden change in temperature data or air pressure data can mean that the temperature or air pressure drops within a certain period of time, such as within 20 seconds. Setting value, the process of temperature or air pressure drop can be a gradual process.

In a specific embodiment, step S402 shown in Figure 4 may include the following steps: determining whether there is periodically changing data in the sensor data.

As mentioned above, the sound data will change regularly after the blade is cracked, so in this embodiment, it can be determined whether there is periodically changing data in the sensor data. Periodic data has frequency and amplitude.

Specifically, when the blade is cracked, the sound data, temperature data, and air pressure data will all change, so when there is abnormal data in at least one of the data, it can be determined that the blade is cracked.

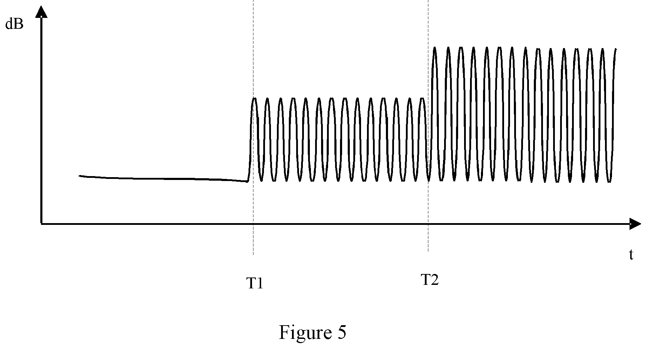

For details, please refer to Figure 5. The sensor data shown in Figure 5 is the sound data collected by the acoustic sensor. The abscissa is time and the ordinate is decibels. At time T1, the decibel value of the sound data begins to change regularly, then it can be determined that there is abnormal data in the collected sound data, and the blades are cracked. Further, at the time T2, the decibel value of the sound data continues to increase, and it can be determined that the length of the blade crack is increasing.

In another specific application scenario of the present disclosure, since a tearing sound is generated when the blade is cracked, the decibel value of the sound when the blade is cracked is very high. Therefore, at time T1, the decibel value of the sound data will first rise to a larger value, and then regular changes will occur after time T1. In this case, it can be determined that the blade is cracked.

Correspondingly, when the sensor data is temperature data, if the temperature value of the temperature data drops suddenly, it can be determined that there is abnormal data in the temperature data, and the blade is cracked. When the sensor data is air pressure data, if the air pressure value drops suddenly, it can be determined that there is abnormal data in the air pressure data, and the blades are cracked.

In a non-limiting embodiment of the present disclosure, the blade state monitoring method may further include the following steps: determining the cracking position of the blade according to the position of the source sensor of the abnormal data.

The embodiment of the present disclosure can also monitor the cracking position, cracking speed or cracking length of the blade through sensor data, and by providing multi-dimensional monitoring results, it provides reference for the maintenance of the blade and further ensures the safety of wind power generation.

In a specific embodiment of the present disclosure, the location of the source sensor of the abnormal data whose amplitude is greater than the first preset threshold or the abnormal data whose frequency is greater than the second preset threshold is determined as the crack location.

In a variation of the present disclosure, if the abnormal data is temperature data, it is determined that the position of the source sensor of the temperature data with a change amplitude greater than the fourth preset threshold is the cracking position; if the abnormal data is air pressure data, Then, it is determined that the position of the source sensor of the air pressure data whose change amplitude is greater than the third preset threshold is the cracking position.

In specific implementation, each sensor collects corresponding sensor data, and each sensor has a fixed position. Then, the crack location can be determined according to the source sensor of the abnormal data, that is, the location of the sensor that collects the abnormal data.

It is understandable that the specific values of the first preset threshold, the second preset threshold, the third preset threshold, and the fourth preset threshold can be set according to actual application scenarios, which are not limited in the embodiment of the present disclosure.

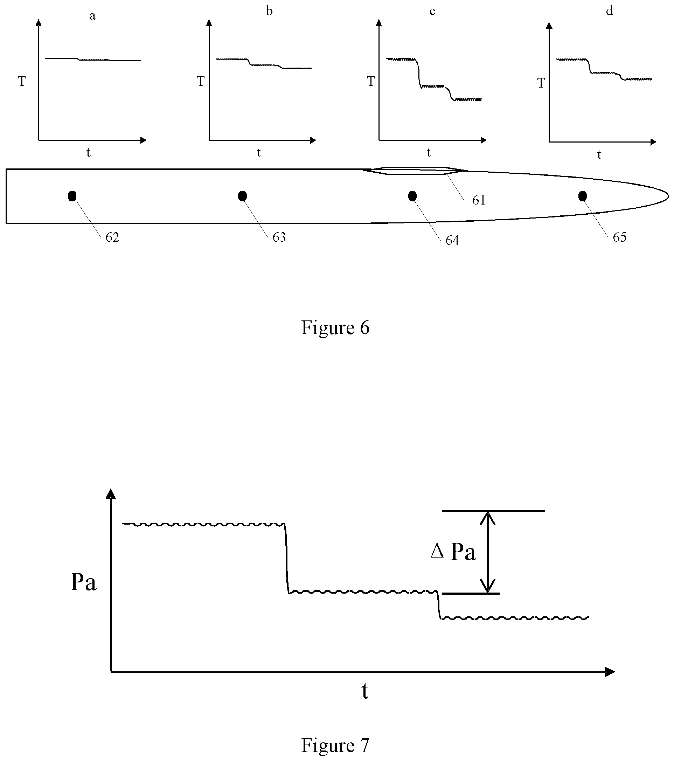

In the following, the sensor data is temperature data as an example. In this scenario, the atmospheric temperature is lower than the temperature inside the blade. Please refer to Figure 6 together. For the temperature sensors 62, 63, 64, and 65 set at different positions in the blade, the temperature data collected at each time are shown in graphs a, b, c, and d, respectively. The horizontal lines in graphs a, b, c, and d The coordinate is time and the ordinate is temperature. From the graphs a, b, c, and d, it can be seen that the temperature data collected by the temperature sensor 64 has the largest change per unit time and is greater than the second preset threshold, then it can be determined that the location of the temperature sensor 64 is a crack Area 61.

Correspondingly, when the sensor data is sound data and air pressure data, the principle of determining the cracking position is similar, and will not be repeated here.

In a specific embodiment of the present disclosure, the cracking speed of the blade is determined according to the change amplitude or the change frequency of the abnormal data in a unit time. Specifically, the cracking speed is determined according to the difference in the amplitude of the abnormal data or the difference in the frequency per unit time, and the greater the difference, the greater the cracking speed.

When determining the crack length according to the frequency of the abnormal sound data, the greater the frequency of the abnormal sound data, the longer the crack length; or, the smaller the frequency of the abnormal sound data, the longer the crack length The longer. The frequency of the sound data referred to in the embodiment of the present disclosure can reflect the frequency generated by the rotation of the blade, and the frequency is related to the rigidity of the blade. After the blade cracks, the rigidity of the blade weakens and the frequency becomes smaller. The smaller the frequency, the longer the length of the blade crack.

When determining the cracking length of the blade according to the change phase of the abnormal sound data, the farther the distance from the cracking position is, the greater the phase of the sound data collected by the sensor. Therefore, the greater the phase of the sound data, the greater the cracking length of the blade.

In specific implementation, the amplitude of the "beat vibration" frequency spectrum sensed by the acoustic sensor installed near the crack can be used to determine the crack length of the blade, that is, the longer the crack length, the greater the amplitude of abnormal sound data. The length of the crack can also be determined by the number of temperature field changes sensed by the temperature sensor installed near the crack. The more the number of adjacent temperature sensors at the position that senses the temperature field change, the larger the blade crack, that is, the collection The more the number of adjacent temperature sensors to the position of abnormal temperature data, the longer the blade crack length. The length of the crack can also be determined by the number of changes in the pressure field detected by the pressure sensor installed near the crack, that is, the more the number of adjacent pressure sensors at the position that senses the change in the pressure field, the larger the blade crack, that is, The more the number of adjacent air pressure sensors where abnormal air pressure data is collected, the longer the blade crack length.

In the embodiment of the present disclosure, the blade crack cracking speed is determined by the severity of the pressure change sensed by the air pressure sensor; or, the blade crack cracking speed is determined by the severity of the temperature field change sensed by the temperature sensor; or, by the acoustic sensor. The difference of the amplitude of the "beat vibration" frequency spectrum per unit time is used to determine the blade crack cracking speed.

In the following, the sensor data is taken as an example of air pressure data. In this scenario, the atmospheric pressure is lower than the air pressure in the blade. Refer to Figure 7 together. The sensor data shown in Figure 7 is the air pressure data collected by the air pressure sensor. The abscissa is time and the ordinate is Pa. In unit time, the greater the air pressure change in a certain area of the blade, the faster the cracks will crack. That is, the larger the air pressure difference Δ Pa shown in Figure 7 is, the larger the cracking speed is.

Similarly, when the sensor data is sound data or temperature data, the greater the sound decibel difference or the temperature difference per unit time, the faster the blade cracking speed, which will not be repeated in this embodiment of the present disclosure.

In a non-limiting embodiment, after detecting the state of the blade to be cracked, an alarm message may also be output, such as an alarm sound or a prompt text, etc., to prompt the user that the blade is cracked. Further, the cracking length, cracking location and/or cracking speed can also be output together for the user's reference.

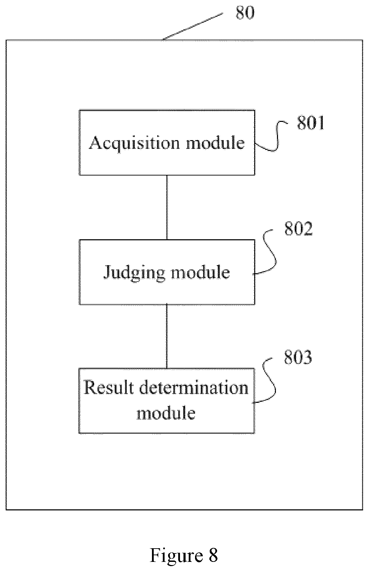

Referring to Figure 8, an embodiment of the present disclosure also discloses a blade state monitoring device 80, and the blade state monitoring device 80 may include:

The acquisition module 801 is configured to acquire sensor data from a sensor array, the sensor array includes a plurality of sensors, the plurality of sensors include acoustic sensors, the sensor array is disposed inside the blade of the wind turbine, and the sensor Data includes sound data;

The judging module 802 is used to judge whether there is abnormal data in the sensor data, and the abnormal data is sensor data whose index value changes regularly;

The result determination module 803 is configured to determine that the state of the blade is cracked when there is abnormal data in the sensor data.

For more details about the working principle and specific implementation of the blade state monitoring device 80, please refer to the foregoing embodiment, which will not be repeated here.

The blade state monitoring device 80 (virtual device) may be, for example, a chip or a chip module.

The embodiment of the present disclosure also discloses a storage medium, which is a computer-readable storage medium on which a computer program is stored, and the computer program can execute the steps of the method described in Figure 4 when the computer program is running. The storage medium may include ROM, RAM, magnetic disk or optical disk, etc. The storage medium may also include non-volatile memory (non-volatile) or non-transitory memory, etc.

The embodiment of the present disclosure also discloses a wind power generator. The wind power generator has at least one blade, such as three blades, and the sensor array is provided on each blade; the wind power generator further includes a controller, It is arranged in the blade or inside the hub case of the wind generator. The controller is connected to a memory, and the memory is used to store a computer program that is used to execute the steps of the above method when the computer program is run by the processor

It should be understood that the term "and/or" in this article is only an association relationship describing the associated objects, which means that there can be three relationships, for example, A and/or B, which can mean: A alone exists, and A and B exist at the same time. , There are three cases of B alone. In addition, the character "/" in this text indicates that the associated objects before and after are in an "or" relationship.

The "plurality" appearing in the embodiments of the present application refers to two or more than two.

The descriptions of the first, second, etc. appearing in the embodiment of this application are only used for illustration and to distinguish the description objects, and there is no order, and it does not mean that the number of devices in the embodiment of this application is particularly limited, and cannot constitute Any limitations of the embodiment.

The "connection" appearing in the embodiment of this application refers to various connection modes such as direct connection or indirect connection to realize communication between devices, which is not limited in the embodiment of this application.

It should be understood that in this embodiment of the present application, the processor may be a central processing unit (central processing unit, CPU for short), and the processor may also be other general-purpose processors or digital signal processors (DSP for short). , Application specific integrated circuit (ASIC), field programmable gate array (FPGA) or other programmable logic devices, discrete gates or transistor logic devices, discrete hardware components, etc. The general-purpose processor may be a microprocessor or the processor may also be any conventional processor or the like.

It should also be understood that the memory in the embodiment of the present application may be volatile memory or non-volatile memory, or may include both volatile and non-volatile memory. Among them, the non-volatile memory can be read-only memory (read-only memory, ROM for short), programmable read-only memory (programmable ROM, PROM for short), erasable PROM (EPROM for short) , Electrically erasable programmable read-only memory (electrically EPROM, referred to as EEPROM) or flash memory. The volatile memory may be a random access memory (random access memory, RAM for short), which is used as an external cache. By way of exemplary but not restrictive description, many forms of random access memory (RAM for short) are available, such as static random access memory (static RAM, SRAM for short), dynamic random access memory (DRAM), synchronous Dynamic random access memory (synchronous DRAM, referred to as SDRAM), double data rate SDRAM (referred to as DDR SDRAM), enhanced synchronous dynamic random access memory (enhanced SDRAM, referred to as ESDRAM), Synchronously connect dynamic random access memory (synchlink DRAM, referred to as SLDRAM) and direct memory bus random access memory (direct rambus RAM, referred to as DR RAM).

The foregoing embodiment may be implemented in whole or in part by software, hardware, firmware, or any other combination. When implemented using software, the above-mentioned embodiment may be implemented in the form of a computer program product in whole or in part. The computer program product includes one or more computer instructions or computer programs. When the computer instructions or computer programs are loaded or executed on the computer, the processes or functions described in the embodiment of the present application are generated in whole or in part. The computer may be a general-purpose computer, a special-purpose computer, a computer network, or other programmable devices. The computer instructions may be stored in a computer-readable storage medium, or transmitted from one computer-readable storage medium to another computer-readable storage medium. For example, the computer instructions may be transmitted from a website, computer, server, or data center. Transmission to another website, computer, server or data center via wired or wireless means. The computer-readable storage medium may be any available medium that can be accessed by a computer or a data storage device such as a server or a data center that includes one or more sets of available media. The usable medium may be a magnetic medium (for example, a floppy disk, a hard disk, and a magnetic tape), an optical medium (for example, a DVD), or a semiconductor medium. The semiconductor medium may be a solid state drive.

It should be understood that in the various embodiment of the present application, the size of the sequence numbers of the above-mentioned processes does not mean the order of execution. The execution order of the processes should be determined by their functions and internal logic, and should not correspond to the embodiment of the present application. The implementation process constitutes any limitation.

In the several embodiment provided in this application, it should be understood that the disclosed method, device, and system can be implemented in other ways. For example, the device embodiment described above are only illustrative; for example, the division of the units is only a logical function division, and there may be other divisions in actual implementation; for example, multiple units or components can be combined or It can be integrated into another system, or some features can be ignored or not implemented. In addition, the displayed or discussed mutual coupling or direct coupling or communication connection may be indirect coupling or communication connection through some interfaces, devices or units, and may be in electrical, mechanical or other forms.

The units described as separate components may or may not be physically separated, and the components displayed as units may or may not be physical units, that is, they may be located in one place, or they may be distributed on multiple network units. Some or all of the units may be selected according to actual needs to achieve the objectives of the solutions of the embodiment.

In addition, the functional units in the various embodiment of the present disclosure may be integrated into one processing unit, or each unit may be separately physically included, or two or more units may be integrated into one unit. The above-mentioned integrated unit may be implemented in the form of hardware, or may be implemented in the form of hardware plus software functional units.

The above-mentioned integrated unit implemented in the form of a software functional unit may be stored in a computer readable storage medium. The above-mentioned software functional unit is stored in a storage medium, and includes several instructions to enable a computer device (which may be a personal computer, a server, or a network device, etc.) to perform some steps of the method described in each embodiment of the present disclosure. The aforementioned storage media include: U disk, mobile hard disk, read-only memory (Read-Only Memory, ROM for short), random access memory (Random Access Memory, RAM for short), magnetic disks or optical disks, etc., which can store program code Medium.

Although the present disclosure is disclosed as above, the present disclosure is not limited to this. Any person skilled in the art can make various changes and modifications without departing from the scope of the present disclosure. Therefore, the protection scope of the present disclosure should be subject to the scope defined by the claims.

## Claims

1. A blade state monitoring method comprising:
acquiring sensing data from a sensor array, the sensor array including a plurality of sensors, and the plurality of sensors including acoustic sensors, wherein the sensor array is disposed inside a blade of a wind turbine, and the sensing data includes sound data;
determining whether there is abnormal data in the sensor data, wherein the abnormal data is sensor data whose index value changes regularly when the sensor data is sound data; and
determining that a state of the blade is cracked if there is abnormal data;
**characterized by** further comprising:
determining a cracking speed of the blade according to a change amplitude or a change frequency of the abnormal data in a unit time; and/or
determining a crack length of the blade according to the amplitude, phase or frequency of the abnormal data.

2. The method according to claim 1, **characterized in that** determining whether there is abnormal data in the sensor data comprises:
determining whether there is periodically changing data in the sensor data.

3. The method according to claim 1, **characterized by** further comprising:
determining a cracking position of the blade according to a position of a source sensor of the abnormal data.

4. The method according to claim 3, **characterized in that** the abnormal data has an amplitude and a frequency, and determining the cracking position of the blade according to the position of the source sensor of the abnormal data comprises:
determining the position of the source sensor of the abnormal data whose amplitude is greater than a first preset threshold or the abnormal data whose frequency is greater than a second preset threshold, as the cracking position.

5. The method according to claim 1, **characterized in that** determining the cracking speed of the blade according to the change amplitude or the change frequency of the abnormal data in a unit time comprises:
determining the cracking speed according to a difference in the amplitude or the frequency of the abnormal data at adjacent collection moments, wherein the greater the difference, the greater the cracking speed.

6. The method according to claim 1, **characterized in that** determining the crack length of the blade according to the amplitude, phase or frequency of the abnormal data comprises:
determining the crack length according to an amplitude or frequency of abnormal sound data, wherein the greater the amplitude or frequency of the abnormal sound data, the longer the crack length.

7. The method according to claim 1, **characterized in that** the sensor array further includes a temperature sensor and/or an air pressure sensor, and the sensor data includes temperature data and/or air pressure data.

8. The method according to claim 7, **characterized in that** a plurality of sensors are staggered and fixed inside the blade or fixed in parallel inside the blade.

9. The method according to claim 1, **characterized in that** the sensor array is arranged in a direction of a blade root pointing to a blade tip, and is fixed at a leading edge position, a trailing edge position of the blade or a web inside the blade.

10. The method according to claim 1, **characterized in that** a plurality of sensors in the sensor array are fixed inside the blade according to a preset distance.

11. The method according to claim 1, **characterized in that** the plurality of sensors are passive sensors, or the plurality of sensors are MEMS optical fiber sensors.

12. A blade state monitoring device comprising:
an acquisition module (801), configured to acquire sensor data from a sensor array, the sensor array including a plurality of sensors, the plurality of sensors including acoustic sensors, wherein the sensor array is arranged inside a blade of a wind turbine, and the sensor data includes sound data;
a judging module (802) for judging whether there is abnormal data in the sensor data, wherein the abnormal data is sensor data whose index value changes regularly when the sensor data is sound data; and
a result determination module (803) used to determine that a state of the blade is cracked when there is abnormal data in the sensor data;
**characterized in that**, a cracking speed of the blade is determined according to a change amplitude or a change frequency of the abnormal data in a unit time, and/or a crack length of the blade is determined according to the amplitude, phase or frequency of the abnormal data.

13. A storage medium having a computer program stored thereon, **characterized in that** the computer program executes the steps of the blade state monitoring method according to any one of claims 1 to 11 when the computer program is run by a processor.

14. A wind power generator, comprising blades, **characterized by** further comprising:
a sensor array, arranged inside the blades of the wind power generator; and
a controller, coupled to the sensor array, and configured to execute the blade state monitoring method according to any one of claims 1-11.

## Patentansprüche

1. Schaufelzustandsüberwachungsverfahren, das Folgendes umfasst:
Erfassen von Abtastwerten von einem Sensorarray, wobei der Sensorarray eine Vielzahl von Sensoren beinhaltet und die Vielzahl von Sensoren Akustiksensoren beinhalten, wobei das Sensorarray in einer Schaufel einer Windturbine angeordnet ist und die Abtastwerte Schalldaten beinhalten;
Bestimmen, ob die Sensordaten unnormale Daten enthalten, wobei die unnormalen Daten Sensordaten sind, deren Indexwert sich regelmäßig ändert, wenn die Sensordaten Schalldaten sind; und
Bestimmen, dass ein Zustand der Schaufel gerissen ist, wenn unnormale Daten vorliegen;
**dadurch gekennzeichnet, dass** es ferner Folgendes umfasst:
Bestimmen einer Reißgeschwindigkeit der Schaufel gemäß einer Änderungsamplitude oder einer Änderungsfrequenz der unnormalen Daten in einer Zeiteinheit; und/oder
Bestimmen einer Risslänge der Schaufel gemäß der Amplitude, der Phase oder der Frequenz der unnormalen Daten.

2. Verfahren nach Anspruch 1, **dadurch gekennzeichnet, dass** das Bestimmen, ob die Sensordaten unnormale Daten enthalten, Folgendes umfasst:
Bestimmen, ob die Sensordaten sich periodisch ändernde Daten enthalten.

3. Verfahren nach Anspruch 1, **dadurch gekennzeichnet, dass** es ferner Folgendes umfasst:
Bestimmen einer Rissposition der Schaufel gemäß einer Position eines Quellsensors der unnormalen Daten.

4. Verfahren nach Anspruch 3, **dadurch gekennzeichnet, dass** die unnormalen Daten eine Amplitude und eine Frequenz aufweisen und das Bestimmen der Rissposition der Schaufel gemäß der Position des Quellsensors der unnormalen Daten Folgendes umfasst:
Bestimmen der Position des Quellsensors der unnormalen Daten, deren Amplitude größer ist als ein erster voreingestellter Schwellwert, oder der unnormalen Daten, deren Frequenz größer ist als ein zweiter voreingestellter Schwellwert, als die Rissposition.

5. Verfahren nach Anspruch 1, **dadurch gekennzeichnet, dass** das Bestimmen der Reißgeschwindigkeit der Schaufel gemäß der Änderungsamplitude oder der Änderungsfrequenz der unnormalen Daten in einer Zeiteinheit Folgendes umfasst:
Bestimmen der Reißgeschwindigkeit gemäß einer Differenz der Amplitude oder der Frequenz der unnormalen Daten in benachbarten Sammelmomenten, wobei je größer die Differenz ist, umso größer die Reißgeschwindigkeit ist.

6. Verfahren nach Anspruch 1, **dadurch gekennzeichnet, dass** das Bestimmen der Risslänge der Schaufel gemäß der Amplitude, der Phase oder der Frequenz der unnormalen Daten Folgendes umfasst:
Bestimmen der Risslänge gemäß einer Amplitude oder Frequenz der unnormalen Schalldaten, wobei je größer die Amplitude oder die Frequenz der unnormalen Schalldaten ist, umso länger die Risslänge ist.

7. Verfahren nach Anspruch 1, **dadurch gekennzeichnet, dass** das Sensorarray ferner einen Temperatursensor und/oder einen Luftdrucksensor beinhaltet und die Sensordaten Temperaturdaten und/oder Luftdruckdaten beinhalten.

8. Verfahren nach Anspruch 7, **dadurch gekennzeichnet, dass** eine Vielzahl von Sensoren in der Schaufel abgestuft und befestigt sind oder in der Schaufel parallel befestigt sind.

9. Verfahren nach Anspruch 1, **dadurch gekennzeichnet, dass** das Sensorarray in einer Richtung einer Schaufelwurzel angebracht ist, die zu einer Schaufelspitze zeigt, und in einer Vorderkantenposition, einer Hinterkantenposition der Schaufel oder einem Steg in der Schaufel befestigt ist.

10. Verfahren nach Anspruch 1, **dadurch gekennzeichnet, dass** eine Vielzahl von Sensoren im Sensorarray gemäß einem voreingestellten Abstand in der Schaufel befestigt sind.

11. Verfahren nach Anspruch 1, **dadurch gekennzeichnet, dass** die Vielzahl von Sensoren passive Sensoren sind oder die Vielzahl von Sensoren optische MEMS-Glasfasersensoren sind.

12. Schaufelzustandsüberwachungsvorrichtung, die Folgendes umfasst:
ein Erfassungsmodul (801), das dazu ausgelegt ist, Sensordaten von einem Sensorarray zu erfassen, wobei das Sensorarray eine Vielzahl von Sensoren beinhaltet, die Vielzahl von Sensoren Akustiksensoren beinhalten, wobei das Sensorarray in einer Schaufel einer Windturbine angebracht ist und die Sensordaten Schalldaten beinhalten;
ein Beurteilungsmodul (802) zum Beurteilen, ob die Sensordaten unnormale Daten enthalten, wobei die unnormalen Daten Sensordaten sind, deren Indexwert sich regelmäßig ändert, wenn die Sensordaten Schalldaten sind; und
ein Ergebnisbestimmungsmodul (803), das verwendet wird, um zu bestimmen, dass ein Zustand der Schaufel gerissen ist, wenn die Sensordaten unnormale Daten enthalten;
**dadurch gekennzeichnet, dass** eine Reißgeschwindigkeit der Schaufel gemäß einer Änderungsamplitude oder einer Änderungsfrequenz der unnormalen Daten in einer Zeiteinheit bestimmt wird und/oder eine Risslänge der Schaufel gemäß der Amplitude, der Phase oder der Frequenz der unnormalen Daten bestimmt wird.

13. Speichermedium, auf dem ein Computerprogramm gespeichert ist, **dadurch gekennzeichnet, dass** das Computerprogramm die Schritte des Schaufelzustandsüberwachungsverfahrens nach einem der Ansprüche 1 bis 11 ausführt, wenn das Computerprogramm auf einem Prozessor läuft.

14. Windkraftgenerator, der Schaufeln umfasst, **dadurch gekennzeichnet, dass** er ferner Folgendes umfasst:
ein Sensorarray, das in den Schaufeln des Windkraftgenerators angebracht ist; und
eine Steuerung, die an das Sensorarray gekoppelt und dazu ausgelegt ist, das Schaufelzustandsüberwachungsverfahren nach einem der Ansprüche 1 bis 11 auszuführen.

## Revendications

1. Procédé de surveillance d'état de pale comprenant les étapes suivantes :
acquérir des données de détection à partir d'un réseau de capteurs, le réseau de capteurs comportant une pluralité de capteurs, et la pluralité de capteurs comportant des capteurs acoustiques, dans lequel le réseau de capteurs est disposé à l'intérieur d'une pale d'une éolienne, et les données de détection comportent des données sonores ;
déterminer s'il y a des données anormales dans les données de capteur, dans lequel les données anormales sont des données de capteur dont la valeur d'indice change régulièrement lorsque les données de capteur sont des données sonores ; et
déterminer qu'un état de la pale est fissuré s'il y a des données anormales ;
**caractérisé en ce qu'**il comprend en outre les étapes suivantes :
déterminer une vitesse de fissuration de la pale selon une amplitude de changement ou une fréquence de changement des données anormales dans une unité de temps ; et/ou
déterminer une longueur de fissure de la pale selon l'amplitude, la phase ou la fréquence des données anormales.

2. Procédé selon la revendication 1, **caractérisé en ce que** la détermination de la présence éventuelle de données anormales dans les données de capteur comprend :
la détermination de la présence éventuelle dans les données de capteur de données qui changent périodiquement.

3. Procédé selon la revendication 1, **caractérisé en ce qu'**il comprend en outre :
la détermination d'une position de fissuration de la pale selon une position d'un capteur source des données anormales.

4. Procédé selon la revendication 3, **caractérisé en ce que** les données anormales ont une amplitude et une fréquence, et la détermination de la position de fissuration de la pale selon la position du capteur source des données anormales comprend :
la détermination de la position du capteur source des données anormales dont l'amplitude est supérieure à un premier seuil prédéfini ou des données anormales dont la fréquence est supérieure à un deuxième seuil prédéfini, comme étant la position de fissuration.

5. Procédé selon la revendication 1, **caractérisé en ce que** la détermination de la vitesse de fissuration de la pale selon l'amplitude de changement ou la fréquence de changement des données anormales dans une unité de temps comprend :
la détermination de la vitesse de fissuration selon une différence d'amplitude ou de fréquence des données anormales à des moments de collecte adjacents, dans lequel plus la différence est importante, plus la vitesse de fissuration est importante.

6. Procédé selon la revendication 1, **caractérisé en ce que** la détermination de la longueur de fissure de la pale selon l'amplitude, la phase ou la fréquence des données anormales comprend :
la détermination de la longueur de fissure selon une amplitude une fréquence de données sonores anormales, dans lequel plus l'amplitude ou la fréquence des données sonores anormales est importante, plus la longueur de fissure est importante.

7. Procédé selon la revendication 1, **caractérisé en ce que** le réseau de capteurs comporte en outre un capteur de température et/ou un capteur de pression atmosphérique, et les données de capteur comportent des données de température et/ou des données de pression atmosphérique.

8. Procédé selon la revendication 7, **caractérisé en ce qu'**une pluralité de capteurs sont disposés en quinconce et fixés à l'intérieur de la pale, ou fixés en parallèle à l'intérieur de la pale.

9. Procédé selon la revendication 1, **caractérisé en ce que** le réseau de capteurs est agencé dans une direction allant d'un pied de pale pour pointer vers une pointe de pale, et est fixé à une position de bord d'attaque, à une position de bord de fuite de la pale ou à une bande à l'intérieur de la pale.

10. Procédé selon la revendication 1, **caractérisé en ce qu'**une pluralité de capteurs dans le réseau de capteurs sont fixés à l'intérieur de la pale selon une distance prédéfinie.

11. Procédé selon la revendication 1, **caractérisé en ce que** la pluralité de capteurs sont des capteurs passifs, ou la pluralité de capteurs sont des capteurs à fibre optique MEMS.

12. Dispositif de surveillance d'état de pale comprenant :
un module d'acquisition (801), configuré pour acquérir des données de capteur à partir d'un réseau de capteurs, le réseau de capteurs comportant une pluralité de capteurs, la pluralité de capteurs comportant des capteurs acoustiques, dans lequel le réseau de capteurs est agencé à l'intérieur d'une pale d'une éolienne, et les données de capteur comportent des données sonores ;
un module de jugement (802) pour juger s'il y a des données anormales dans les données de capteur, dans lequel les données anormales sont des données de capteur dont la valeur d'indice change régulièrement lorsque les données de capteur sont des données sonores ; et
un module de détermination des résultats (803) utilisé pour déterminer qu'un état de la pale est fissuré lorsqu'il y a des données anormales dans les données de capteur ;
**caractérisé en ce qu'**une vitesse de fissuration de la pale est déterminée selon une amplitude de changement ou une fréquence de changement des données anormales dans une unité de temps, et/ou une longueur de fissure de la pale est déterminée selon l'amplitude, la phase ou la fréquence des données anormales.

13. Support de stockage sur lequel est stocké un programme informatique, **caractérisé en ce que** le programme informatique exécute les étapes du procédé de surveillance d'état de pale selon l'une des revendications 1 à 11 lorsque le programme informatique est exécuté par un processeur.

14. Générateur d'énergie, comprenant des pales, **caractérisé en ce qu'**il comprend en outre :
un réseau de capteurs agencé à l'intérieur des pales du générateur d'énergie éolienne ; et
un dispositif de commande couplé au réseau de capteurs et configuré pour exécuter le procédé de surveillance d'état de pale selon l'une des revendications 1 à 11.
